# EUROPÄISCHE PATENTANMELDUNG

(11) **EP 4 631 627 A1**
(43) Veröffentlichungstag der Anmeldung: **15.10.2025**
(21) Anmeldenummer: 24169635.0
(22) Anmeldetag: 11.04.2024
(51) Int. Cl.: B05B 15/55, B05B 15/555, H01M 50/627

(54) **REINIGUNGSANORDNUNG FÜR EINEN FÜLLKOPF**

(71) Anmelder: Manz AG, 72768 Reutlingen (DE)
(72) Erfinder: BÄDER, Christoph, 73776 Altbach (DE)
(74) Vertreter: Kohler Schmid Möbus Patentanwälte

(57) **Zusammenfassung**

Die Erfindung betrifft eine Reinigungsanordnung (30) zur Reinigung eines insbesondere zwei Kammern (12, 14) aufweisenden Füllkopfs (10), der zur Befüllung von elektrochemischen Zellen mit einem Elektrolyt vorgesehen ist, mit einer ersten, insbesondere unteren, Reinigungseinheit (32), die einen Anschluss (34) zum Anschluss an den Füllkopf (10) im Bereich einer Zellbefüllöffnung (22) des Füllkopfs (10) und eine Sprüheinrichtung (36) zum Ansprühen der Zellbefüllöffnung (22) mit einem Reinigungsmedium sowie eine Reinigungsmediumaufnahme (44) aufweist.

## Beschreibung

Die Erfindung betrifft eine Reinigungsanordnung zur Reinigung eines insbesondere zwei Kammern aufweisenden Füllkopfs, der zur Befüllung von elektrochemischen Zellen mit einem Elektrolyt vorgesehen ist.

Zur schnellen und effektiven Befüllung von elektrochemischen Zellen mit einem Elektrolyt wird beispielsweise in der noch nicht veröffentlichten europäischen Patentanmeldung 22202925.8 der Anmelderin vorgeschlagen, einen Füllkopf mit einer Vorkammer und einer Befüllkammer zu verwenden, wobei ein zwischen einer Offenstellung und einer Schließstellung bewegbares Absperrorgan vorgesehen ist, welches in der Offenstellung eine Öffnung der Vorkammer freigibt und in der Schließstellung die Öffnung verschließt. Wenn ein solcher Füllkopf zum Befüllen von elektrochemischen Zellen mit einem Elektrolyt verwendet wird, so kann es an unterschiedlichen Stellen zu Verunreinigungen, insbesondere mit Kristallbildung, kommen.

Durch die Kristallbildung kann es zu Undichtigkeiten kommen. Außerdem muss verhindert werden, dass Kristalle in eine elektrochemische Zelle gelangen, da dadurch die Qualität der elektrochemischen Zelle leiden kann.

Aufgabe der vorliegenden Erfindung ist es daher, eine Reinigungsanordnung bereitzustellen, mit der ein Füllkopf, insbesondere ein Füllkopf, der zwei Kammern aufweist, zuverlässig gereinigt werden kann, insbesondere, ohne dass dabei eine Kontamination entsteht.

Gelöst wird diese Aufgabe gemäß einem ersten Aspekt der Erfindung durch eine Reinigungsanordnung, zur Reinigung eines insbesondere zwei Kammern aufweisenden Füllkopfs, der zur Befüllung von elektrochemischen Zellen mit einem Elektrolyt vorgesehen ist, mit einer ersten, insbesondere unteren, Reinigungseinheit, die einen Anschluss zum Anschluss an den Füllkopf im Bereich einer Zellbefüllöffnung des Füllkopfs und eine Sprüheinrichtung zum Ansprühen der Zellbefüllöffnung mit einem Reinigungsmedium sowie eine Reinigungsmediumaufnahme aufweist.

Durch die erste Reinigungseinheit kann der Füllkopf von unten mit einem Reinigungsmedium angespritzt werden. So kann insbesondere eine Dichtung, die zur Abdichtung des Füllkopfs zur elektrochemischen Zelle dient, effektiv gereinigt werden. An dieser Stelle, nämlich der Zellbefüllöffnung des Füllkopfs, entstehen besonders schnell Verunreinigungen und Kristallbildung. Die Zellbefüllöffnung kann durch die erfindungsgemäße Reinigungsanordnung besonders zuverlässig gereinigt werden. Gleichzeitig kann eine gewisse Menge von Reinigungsmedium in die untere Kammer des Füllkopfs gelangen, sodass der Bereich der Kammer oberhalb der Zellbefüllöffnung zudem in diesem Schritt gereinigt werden kann. Verunreinigtes Reinigungsmedium kann durch die Reinigungsmediumaufnahme gesammelt werden. Somit kann eine Verunreinigung einer Elektrolytbefüllanordnung verhindert werden. Insbesondere ist es möglich, mit der erfindungsgemäßen Reinigungsanordnung den Füllkopf in der Elektrolytbefüllanordnung zu reinigen. Es ist nicht notwendig, den Füllkopf aus der Elektrolytbefüllanordnung zu entnehmen und separat zu reinigen, wenn gleich dies denkbar wäre.

Besondere Vorteile ergeben sich, wenn die Sprüheinrichtung eine Sprühdüse umfasst. Über eine Sprühdüse kann beispielsweise eingestellt werden, mit welchem Druck Reinigungsmedium auf den Füllkopf gesprüht wird.

Weitere Vorteile ergeben sich, wenn die Sprüheinrichtung eine Sprühlanze umfasst. Dabei kann die Sprühdüse am freien Ende der Sprühlanze angeordnet sein. Über die Sprühlanze ist es möglich, Reinigungsmedium möglichst nahe an die Zellbefüllöffnung heranzuführen, ehe dieses versprüht wird. Außerdem kann gezielt die Zellbefüllöffnung bzw. eine diese umgebende Dichtung, angesprüht werden.

Weitere Vorteile ergeben sich, wenn der Anschluss der ersten Reinigungseinheit eine Dichtung umfasst. Somit kann die erste Reinigungseinheit gegenüber dem Füllkopf abgedichtet werden. So kann sichergestellt werden, dass Reinigungsmedium ausschließlich in den Füllkopf bzw. in den Bereich der Zellbefüllöffnung gelangt. Diese Dichtung des Anschlusses kann sich außerhalb der Dichtung zur elektrochemischen Zelle befinden, sodass die Dichtung zur elektrochemischen Zelle, die sich im Bereich der Zellbefüllöffnung befindet, gereinigt werden kann.

Der Anschluss kann die Reinigungsmediumaufnahme nach oben begrenzen. Dies bedeutet, dass ein kleiner Bereich des Füllkopfs, der die Zellbefüllöffnung aufweist, in die Reinigungsmediumaufnahme ragt. So kann sicher verhindert werden, dass Reinigungsmedium unbeabsichtigt nach außen gelangt.

Die Sprüheinrichtung kann zumindest abschnittsweise in der Reinigungsmediumaufnahme angeordnet sein. So kann sichergestellt werden, dass von der Sprüheinrichtung versprühtes Reinigungsmedium möglichst vollständig durch die Reinigungsmediumaufnahme aufgenommen wird.

Weitere Vorteile ergeben sich, wenn die erste Reinigungseinheit relativ zu einem Füllkopf bewegbar angeordnet ist. Dabei kann die erste Reinigungseinheit zum einen vertikal bewegbar sein, um an einen Füllkopf von unten herangefahren und nach der Reinigung von diesem entfernt werden zu können. Weiterhin ist eine horizontale Relativbewegung denkbar. So kann die erste Reinigungseinheit beispielsweise in eine Parkposition verfahren werden, wenn keine Reinigung des Füllkopfs ansteht. Außerdem ist es möglich, dieselbe Reinigungseinheit zu mehreren Füllköpfen, insbesondere anderer Prozessstationen, zu verfahren, um nacheinander die Füllköpfe unterschiedlicher Prozessstationen zu reinigen. Mehrere erste Reinigungseinheiten können zu einer ersten Reinigungsvorrichtung zusammengefasst sein. Insbesondere können sie an einem gemeinsamen Träger oder Portal angeordnet sein, sodass sie gemeinsam bewegt werden können. Die erste Reinigungsvorrichtung kann beispielsweise zu einer anderen Prozessstation verfahren werden, um die Füllköpfe dieser Prozessstation zu reinigen. Die Anzahl von ersten Reinigungseinheiten einer ersten Reinigungsvorrichtung kann der Anzahl von Füllköpfen einer Prozessstation entsprechen. So können mehrere Füllköpfe einer Prozessstation gleichzeitig gereinigt werden.

Die Reinigungsanordnung kann eine zweite, insbesondere obere, Reinigungseinheit aufweisen, die eine Einfülleinrichtung zum Einfüllen von Reinigungsmedium und/oder Spülgas in den Füllkopf aufweist. Die Einfülleinrichtung kann beispielsweise als Lanze ausgebildet sein, die in die obere Kammer des Füllkopfs ragen kann. Somit kann Reinigungsmedium in die obere Kammer des Füllkopfs eingebracht werden.

Die zweite Reinigungseinheit kann eine Entlüftungseinrichtung aufweisen. Die Entlüftungseinrichtung kann beispielsweise als Ventil oder als Lanze ausgebildet sein. Die der Entlüftung dienende Lanze kann parallel zu einer der Befüllung dienenden Lanze angeordnet sein. Über die Entlüftungseinrichtung kann die obere Kammer entlüftet werden, wenn diese mit Reinigungsmedium befüllt wird.

Die Einfülleinrichtung und die Entlüftungseinrichtung können fluiddicht in einem Adapter angeordnet sein, der wiederum fluiddicht auf eine Öffnung des Füllkopfs aufsetzbar oder in eine Öffnung des Füllkopfs einsetzbar ist. Somit ist es möglich, die gesamte obere Kammer mit Reinigungsmedium zu fluten. Auch die zweite Reinigungseinheit kann relativ zum Füllkopf bewegbar sein. Somit ist es möglich, mit derselben zweiten Reinigungseinheit mehrere Füllköpfe zu reinigen, die nacheinander angefahren werden. Dabei kann die zweite Reinigungseinheit an einer Einheit zum Befüllen des Füllkopfs mit Elektrolyt angeordnet sein.

In den Rahmen der Erfindung fällt außerdem eine Elektrolytbefüllanordnung mit zumindest einem insbesondere stationär angeordneten Füllkopf und einer erfindungsgemäßen Reinigungsanordnung. Vorzugsweise sind mehrere Prozessstationen vorgesehen, wobei an jeder Prozessstation mehrere Füllköpfe angeordnet sind. Dabei kann jeder Prozessstation eine Reinigungsanordnung zugeordnet sein (gleich viele Reinigungsanordnungen wie Prozessstationen). Alternativ kann eine Reinigungsanordnung mehreren Prozessstationen zugeordnet sein, sodass die Reinigungsanordnung zwischen den Prozessstationen bewegt und insbesondere nach Bedarf, Füllköpfe einer Prozessstation reinigen kann.

Zu diesem Zweck ist es vorteilhaft, wenn die erste und/oder zweite Reinigungseinheit relativ zum Füllkopf bewegbar ist. Insbesondere können die erste und/oder zweite Reinigungseinheit in mehreren Richtungen bewegbar sein. Insbesondere können sie vertikal bewegbar sein zum An- und Abdocken. Seitlich können sie zwischen einer Reinigungsposition und einer Parkposition bewegbar sein. Außerdem können sie zwischen den Füllköpfen bewegbar sein, um nacheinander unterschiedliche Füllköpfe reinigen zu können.

Weiterhin fällt in den Rahmen der Erfindung ein Verfahren zur Reinigung eines zwei Kammern aufweisenden Füllkopfs zur Befüllung von elektrochemischen Zellen mit Elektrolyt mit den Verfahrensschritten:
a) Andocken einer ersten Reinigungseinheit an eine Zellbefüllöffnung des Füllkopfs,
b) Ansprühen der Öffnung, insbesondere einer im Bereich der Öffnung angeordneten Dichtung,
c) Auffangen des Reinigungsmediums in einer Reinigungsmediumaufnahme der ersten Reinigungseinheit.

Das Andocken der ersten Reinigungseinheit erfolgt vorzugsweise fluiddicht. Durch das Ansprühen der Zellbefüllöffnung des Füllkopfs kann insbesondere eine in diesem Bereich angeordnete Dichtung des Füllkopfs besonders effektiv gereinigt werden. Somit kann sichergestellt werden, dass anschließend eine zu befüllende elektrochemische Zelle mit guter Dichtung am Füllkopf angeordnet und befüllt werden kann.

Gemäß einer Verfahrensvariante kann vorgesehen sein, dass die untere Kammer des Füllkopfs über die Zellbefüllöffnung, insbesondere vollständig, mit Reinigungsmedium befüllt wird. Das Entlüften der unteren Kammer kann dabei über seitliche Öffnungen der unteren Kammer erfolgen. Dieser Verfahrensschritt ist auch möglich, ohne dass vorher die Zellbefüllöffnung angesprüht wird. Dieser Reinigungsschritt kann somit insbesondere unmittelbar nach dem Andocken der ersten Reinigungseinheit an die Zellbefüllöffnung des Füllkopfs durchgeführt werden.

Der unteren Kammer des Füllkopfs kann ein Spülgas, insbesondere über eine seitliche Öffnung der unteren Kammer, zugeführt und über die Reinigungsmediumaufnahme abgeleitet werden. Über die seitliche Öffnung kann beispielsweise während des Befüllens einer elektrochemischen Zelle mit Elektrolyt abwechselnd ein Über- oder Unterdruck angelegt werden. Zu Reinigungszwecken kann diese Öffnung der unteren Kammer verwendet werden, um der unteren Kammer ein Spülgas zuzuführen. Beispielsweise kann ein Inertgas, insbesondere Stickstoff, zugeführt werden.

Die obere Kammer des Füllkopfs kann gereinigt werden, indem die obere Kammer des Füllkopfs mit einem Reinigungsmedium befüllt wird. Anschließend kann eine durch ein Absperrorgan verschlossene Öffnung zwischen oberer und unterer Kammer des Füllkopfs geöffnet werden. Das Reinigungsmedium kann durch die Zellbefüllöffnung in die Reinigungsmediumaufnahme abgelassen werden. Somit kann zunächst die obere Kammer des Füllkopfs mit dem Reinigungsmedium befüllt werden. Anschließend kann die Öffnung zur unteren Kammer freigegeben werden, sodass das Reinigungsmedium in die untere Kammer gelangt und von dort in die Reinigungsmediumaufnahme der ersten Reinigungseinheit abgelassen werden kann. Während des Befüllens der oberen Kammer des Füllkopfs kann diese Kammer entlüftet werden, sodass die Kammer vollständig mit Reinigungsmedium befüllt werden kann.

Insbesondere, um Reste des Reinigungsmediums zu entfernen, bzw. die obere Kammer des Füllkopfs zu trocknen, kann dem Füllkopf, insbesondere der oberen Kammer, ein Spülgas zugeführt werden. Beispielsweise kann ein Inertgas verwendet werden. Das Spülgas kann der oberen Kammer des Füllkopfs durch die gleiche Einrichtung zugeführt werden, durch die auch das Reinigungsmedium zugeführt wird.

Der gesamte Füllkopf, insbesondere beide Kammern des Füllkopfs, können gereinigt werden, indem beide Kammern des Füllkopfs mit Reinigungsmedium befüllt werden und anschließend Reinigungsmedium über die Reinigungsmediumaufnahme abgelassen wird. Um das vollständige Befüllen des Füllkopfs, insbesondere beider Kammern zu ermöglichen, kann das Absperrorgan zwischen den beiden Kammern geöffnet sein. Außerdem kann ein Ablauf der Reinigungsmediumaufnahme geschlossen sein, sodass beide Kammern des Füllkopfs mit Reinigungsmedium geflutet werden können. Insbesondere kann das Reinigungsmedium eingefüllt werden, sodass auch Zuleitungen und/oder Kanäle, die an die Kammern des Füllkopfes angeschlossen sind, von Reinigungsmedium durchströmt werden. Somit erfolgt eine umfassende Reinigung des Füllkopfs und daran angeschlossener Leitungen.

Anschließend kann der Füllkopf mit Spülgas durchströmt werden, um das Reinigungsmedium vollständig zu entfernen.

Die Reinigungsmediumaufnahme kann an einen Reinigungsmediumkreislauf angeschlossen sein. In diesem Kreislauf kann eine Reinigungsmediumaufbereitungsanlage vorgesehen sein. Somit kann benutztes Reinigungsmedium über die Reinigungsmediumaufnahme in die Reinigungsmediumaufbereitungsanlage abgeführt werden und von dort kann das aufbereitete Reinigungsmedium wiederum einem Füllkopf zu Reinigungszwecken zugeführt werden.

Weitere Vorteile der Erfindung ergeben sich aus der Beschreibung und der Zeichnung. Ebenso können die vorstehend genannten und die noch weiter ausgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.
- Fig. 1: zeigt eine schematische Darstellung einer Reinigungsanordnung zur Reinigung eines zwei Kammern aufweisenden Füllkopfs;
- Fig. 2a, 2b: zeigen die Reinigung einer unteren Öffnung des Füllkopfs;
- Fig. 3a, 3b: zeigen die Reinigung einer oberen Kammer des Füllkopfs;
- Fig. 4a, 4b: zeigen die Reinigung einer unteren Kammer des Füllkopf;
- Fig. 5a - 5c: zeigen die Reinigung des gesamten Füllkopfs;
- Fig. 6: zeigt stark schematisiert eine Elektrolytbefüllanordnung.

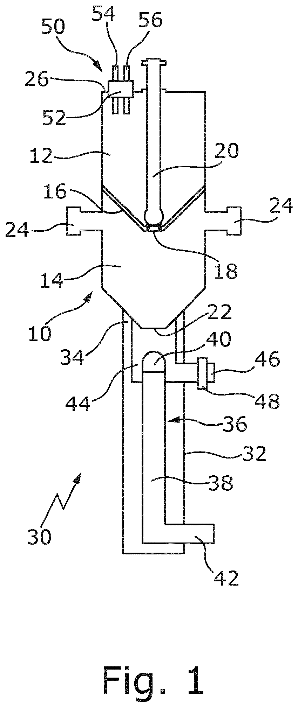

Die Figur 1 zeigt einen Füllkopf 10, der zur Befüllung einer elektrochemischen Zelle mit Elektrolyt vorgesehen ist. Der Füllkopf 10 weist eine obere Kammer 12 und eine untere Kammer 14 auf. Zwischen den Kammern 12, 14 ist eine Wandung 16 vorgesehen, die eine Öffnung 18 aufweist, die durch ein Absperrorgan 20 schließbar ist bzw. freigegeben werden kann.

An unteren Ende weist der Füllkopf 10 eine Zellbefüllöffnung 22 auf, in deren Bereich eine hier nicht dargestellte Dichtung zur Abdichtung gegenüber einer elektrochemischen Zelle vorgesehen ist.

Im Bereich der unteren Kammer 14 sind Anschlüsse bzw. Öffnungen 24 vorgesehen, über die die untere Kammer 14 mit Über- oder Unterdruck beaufschlagt werden kann, um eine angeschlossene elektrochemische Zelle mit Elektrolyt aus der unteren Kammer 14 zu befüllen.

Die obere Kammer 12 weist eine Öffnung 26 auf, durch die Elektrolyt in die obere Kammer 12 eingefüllt werden kann.

Zur Reinigung des Füllkopfs 10 wird nun erfindungsgemäß eine Reinigungsanordnung 30 vorgeschlagen, die eine erste Reinigungseinheit 32 aufweist. Die erste Reinigungseinheit 32 weist einen Anschluss 34 auf, über den die erste Reinigungseinheit 32 im Bereich der Zellbefüllöffnung 22 an den Füllkopf 10 angedockt werden kann. Dabei kann im Bereich des Anschlusses 34 eine Dichtung vorgesehen sein, die die erste Reinigungseinheit 32 gegenüber dem Füllkopf 10 abdichtet.

Die erste Reinigungseinheit 32 weist eine Sprüheinrichtung 36 auf, die eine Spüllanze 38 und eine Düse 40 umfasst. Über die Sprüheinrichtung 36 kann die Zellbefüllöffnung 22, insbesondere die dort angeordnete Dichtung, mit einem Reinigungsmedium abgesprüht werden. Das Reinigungsmedium kann über eine Zuleitung 42 zugeführt werden.

Die erste Reinigungseinheit 32 weist weiterhin eine Reinigungsmediumaufnahme 44 auf, in der Reinigungsmedium gesammelt werden kann. Der Anschluss 34 begrenzt nach oben hin die Reinigungsmediumaufnahme 44. Die Sprüheinrichtung 36 ragt teilweise in die Reinigungsmediumaufnahme 44. Ein Ablauf 46 kann verwendet werden, um Reinigungsmedium aus der Reinigungsmediumaufnahme 44 abzulassen. Dieser Ablauf 46 kann durch ein Absperrorgan 48 bedarfsweise verschlossen werden.

Die Reinigungsanordnung 30 umfasst weiterhin eine zweite Reinigungseinheit 50, die im gezeigten Ausführungsbeispiel einen Adapter 52 aufweist, der fluiddicht in die Öffnung 26 eingesetzt ist. Die zweite Reinigungseinheit 50 weist eine Einfülleinrichtung 54 auf, die hier als Lanze ausgebildet ist und in die obere Kammer 12 ragt. Weiterhin ist eine als Lanze ausgebildete Entlüftungseinrichtung 56 vorgesehen, die ebenfalls in die obere Kammer 12 ragt. Die Einfülleinrichtung 54 und die Entlüftungseinrichtung 56 sind fluiddicht in dem Adapter 52 aufgenommen.

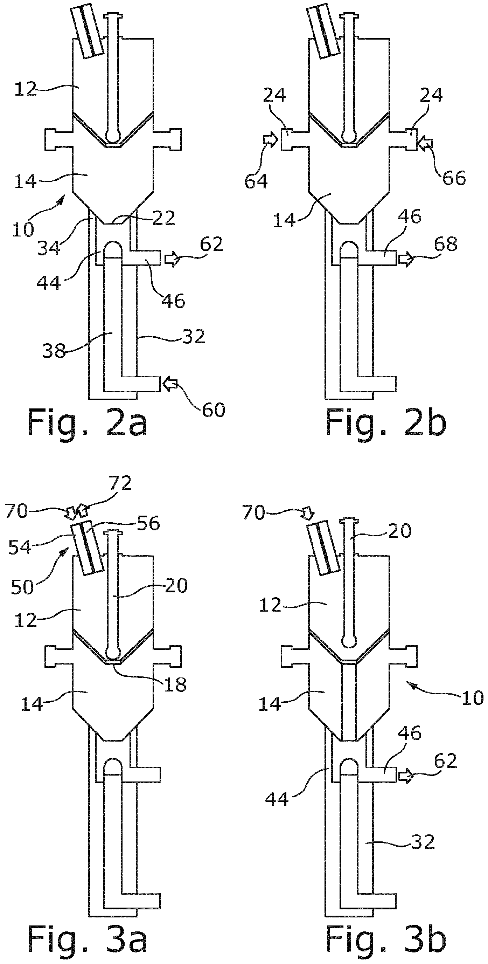

Die Figuren 2a, 2b zeigen stark schematisiert die Reinigung der Zellbefüllöffnung 22. Hierzu wird die erste Reinigungseinheit 32 von unten fluiddicht an den Füllkopf 10 herangebracht, sodass die Zellbefüllöffnung 22 im Bereich der Reinigungsmediumaufnahme 44 angeordnet bzw. vollständig vom Anschluss 34 umgeben ist. Anschließend wird Reinigungsmedium über die Sprüheinrichtung 36 zugeführt und insbesondere die Zellbefüllöffnung 22 und eine dort angeordnete Dichtung mit Reinigungsmedium angesprüht. Dabei gelangen auch geringe Mengen Reinigungsmedium in die untere Kammer 12. Gebrauchtes Reinigungsmedium gelangt in die Reinigungsmediumaufnahme 44 und wird über den Ablauf 46 abgeführt. Das Zuführen des Reinigungsmediums wird durch den Pfeil 60 und das Abführen gebrauchten Reinigungsmediums wird durch den Pfeil 62 symbolisiert.

Anschließend kann die Zufuhr von Reinigungsmedium gestoppt und stattdessen Spülgas durch die Anschlüsse 24 der unteren Kammer 14 zugeführt werden (Fig. 2b). Das Spülgas entweicht ebenfalls durch den Ablauf 46. Das Zuführen von Spülgas wird durch die Pfeile 64, 66 und das Abführen von Spülgas durch den Pfeil 68 symbolisiert.

Die Figuren 3a, 3b zeigen das Reinigen der oberen Kammer 12. Die Öffnung 18 zur unteren Kammer 14 ist verschlossen. Reinigungsmedium wird über die zweite Reinigungseinheit 50, insbesondere deren als Lanze ausgebildeten Einfülleinrichtung 54, der oberen Kammer 12 zugeführt. Beim Befüllen wird die obere Kammer 12 über die Entlüftungseinrichtung 56 entlüftet. Dabei wird die obere Kammer 12 solange mit Reinigungsmedium befüllt (s. Pfeil 70) bis Reinigungsmedium entsprechend dem Pfeil 72 durch die

Entlüftungseinrichtung 56 entweicht. Die obere Kammer 12 wird somit vollständig geflutet. Anschließend wird das Absperrorgan 20 betätigt, um die Öffnung 18 freizugeben, sodass Reinigungsmedium aus der Kammer 12 in die Kammer 14 und von dort in die Reinigungsmediumaufnahme 44 der ersten Reinigungseinheit 32 gelangen kann und durch den Ablauf 46 entsprechend der Pfeilrichtung 62 abgeführt werden kann. Anschließend kann über die Einfülleinrichtung 54 entsprechend dem Pfeil 70 ein Spülgas zugeführt werden, welches ebenfalls den Füllkopf 10 vollständig durchströmt und über die Reinigungsmediumaufnahme 44 und den Ablauf 46 abgeführt werden kann.

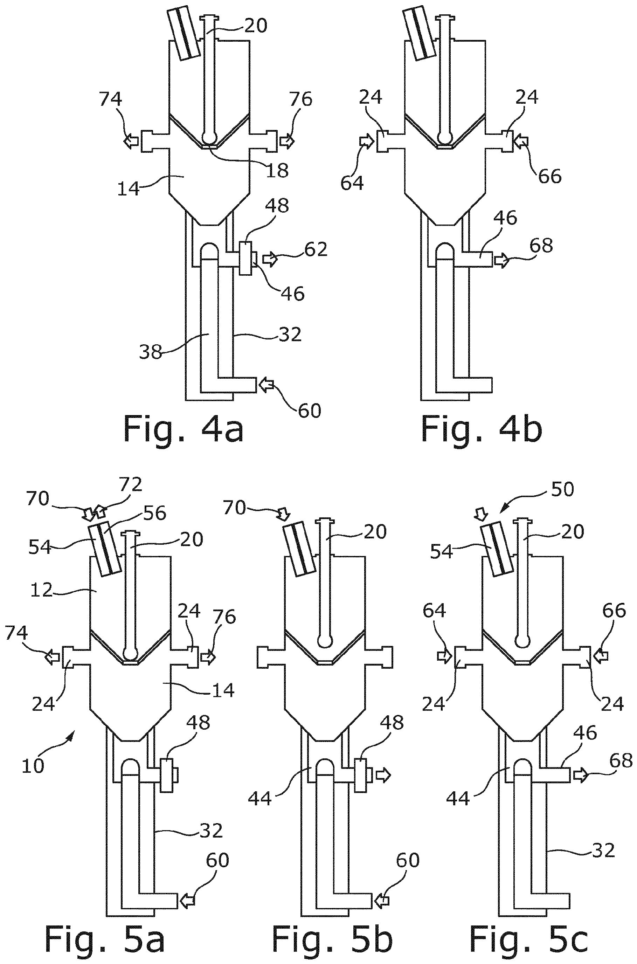

Die Figuren 4a, 4b zeigen das Reinigen der unteren Kammer 14. Die Öffnung 18 ist durch das Absperrorgan 20 verschlossen. Reinigungsmedium wird entsprechend der Pfeilrichtung 60 durch die Sprüheinrichtung 36 der ersten Reinigungseinheit 32 zugeführt. Insbesondere wird dabei so viel Reinigungsmedium zugeführt, dass die untere Kammer 14 vollständig geflutet wird und Reinigungsmedium durch die Anschlüsse 24 entsprechend der Pfeile 74, 76 die untere Kammer 14 verlässt. Das Absperrorgan 48 kann währenddessen verschlossen sein. Anschließend kann die Reinigungsmediumzufuhr gestoppt werden und das Absperrorgan 48 geöffnet werden, sodass das Reinigungsmedium über die Reinigungsmediumaufnahme 44 und den Ablass 46 in Pfeilrichtung 62 abfließen kann. Anschließend kann die untere Kammer 14 mit Spülgas gespült werden (Fig. 4b). Die Figur 4b entspricht der Figur 2b. Insofern kann auf die Beschreibung der Figur 2b verwiesen werden.

Die Figuren 5a - 5c zeigen die Reinigung des gesamten Füllkopfs 10. Bei geschlossenem Absperrorgan 20 wird der oberen Kammer 12 über die Einfülleinrichtung 54 solange entlang der Pfeilrichtung 70 Reinigungsmedium zugeführt, bis Reinigungsmedium die obere Kammer 12 durch die Entlüftungseinrichtung 56 in Pfeilrichtung 72 wieder verlässt.

Der unteren Kammer 14 wird über die erste Reinigungseinheit 32 Reinigungsmedium bei geschlossenem Absperrorgan 48 zugeführt, bis Reinigungsmedium die untere Kammer 14 durch die Anschlüsse 24 verlässt. Die obere und untere Kammer 12, 14 werden demnach mit Reinigungsmedium geflutet. Anschließend kann, wie dies in der Figur 5b gezeigt ist, das Absperrorgan 20 geöffnet werden. Reinigungsmedium kann weiterhin entlang der Pfeile 60, 70 zugeführt werden. Allerdings kann das Absperrorgan 48 geöffnet sein, sodass Reinigungsmedium die Reinigungsmediumaufnahme 44 verlassen kann. Die obere und untere Kammer 12, 14 werden somit eine Zeit lang mit Reinigungsmedium durchspült. Wenn die Reinigungsmediumzufuhr gestoppt wird, kann über die Einfülleinrichtung 54 der zweiten Reinigungseinheit 50 Spülgas zugeführt werden (Fig. 5c). Zusätzlich kann über die Anschlüsse 24 Spülgas zugeführt werden. Das Spülgas wird über die erste Reinigungseinheit, insbesondere die Reinigungsmediumaufnahme 44 und den Ablauf 46, abgeführt.

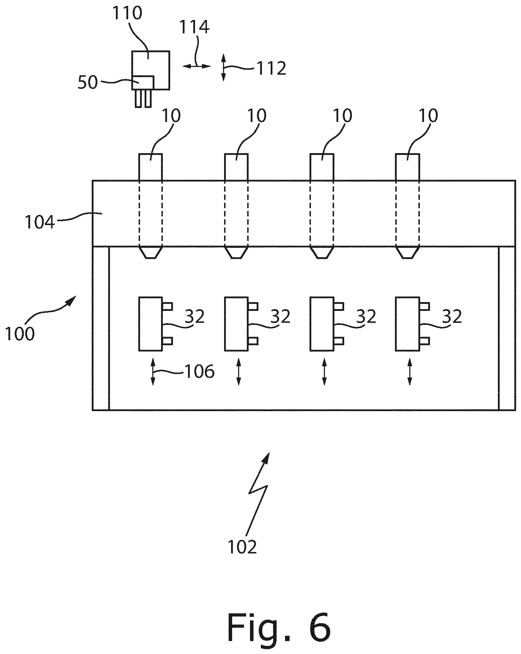

Die Figur 6 zeigt stark schematisiert eine Prozessstation 100 einer Elektrolytbefüllanordnung 102. Die Elektrolytbefüllanordnung 102 kann mehrere Prozessstationen 100 aufweisen. Die Prozessstation 100 weist im gezeigten Ausführungsbeispiel vier Füllköpfe 10 auf, die an einem Deckel 104 angeordnet sind. An den Deckel 104 können von unten elektrochemische Zellen, die zu befüllen sind, herangeführt werden. Die Deckel 104 können stationär angeordnet sein. Ebenso können die Füllköpfe 10 stationär angeordnet sein. Die Deckel 104 können austauschbar an den Prozessstationen 100 angeordnet sein.

Die elektrochemischen Zellen können in einem hier nicht dargestellten Träger angeordnet sein. Jedem der Füllköpfe 10 ist im gezeigten Ausführungsbeispiel eine erste Reinigungseinheit 32 zugeordnet. Die ersten Reinigungseinheiten 32 sind im gezeigten Ausführungsbeispiel in Doppelpfeilrichtung 106 relativ zu den Füllköpfen 10 bewegbar. Somit sind die Reinigungseinrichtungen 32 von unten an die Füllköpfe 10 heranfahrbar. Weiterhin sind die ersten

Reinigungseinheiten 32 senkrecht zur Zeichenebene bewegbar, sodass sie quasi aus dem Weg gefahren werden können, um elektrochemische Zellen von unten an die Füllköpfe 10 heranfahren zu können. Die ersten Reinigungseinheiten 32 können zu einer ersten Reinigungsvorrichtung zusammengefasst sein. Insbesondere können sie an einem gemeinsamen Träger angeordnet sein, sodass sie gemeinsam bewegt werden können. Die erste Reinigungsvorrichtung kann beispielsweise zu einer anderen Prozessstation verfahren werden, um die Füllköpfe dieser Prozessstation zu reinigen.

Über den Füllköpfen 10 ist eine zweite Reinigungseinheit 50 angeordnet, die an einer Elektrolytbefülleinrichtung 110 angeordnet ist. Über die Elektrolytbefülleinrichtung 110 können die Füllköpfe 10 bzw. deren obere Kammern 12 mit Elektrolyt befüllt werden. Zu Reinigungszwecken kann die zweite Reinigungseinheit 50 an die Füllköpfe 10 angedockt werden. Die zweite Reinigungseinheit 50 kann beispielsweise in Doppelpfeilrichtungen 112, 114 relativ zu den Füllköpfen 10 bewegbar sein.

Da die Füllköpfe 10 im Bereich der Zellbefüllöffnung 22 deutlich häufiger gereinigt werden müssen als die obere Kammer 12, sind mehr erste Reinigungseinheiten 32 vorgesehen, als zweite Reinigungseinheiten 50. Die zweite Reinigungseinheit 50 kann zur Reinigung aller vier dargestellten Füllköpfe 10 eingesetzt werden.

## Patentansprüche

1. Reinigungsanordnung (30) zur Reinigung eines insbesondere zwei Kammern (12, 14) aufweisenden Füllkopfs (10), der zur Befüllung von elektrochemischen Zellen mit einem Elektrolyt vorgesehen ist, mit einer ersten, insbesondere unteren, Reinigungseinheit (32), die einen Anschluss (34) zum Anschluss an den Füllkopf (10) im Bereich einer Zellbefüllöffnung (22) des Füllkopfs (10) und eine Sprüheinrichtung (36) zum Ansprühen der Zellbefüllöffnung (22) mit einem Reinigungsmedium sowie eine Reinigungsmediumaufnahme (44) aufweist.

2. Reinigungsanordnung nach Anspruch 1, **dadurch gekennzeichnet, dass** die Sprüheinrichtung (36) eine Sprühdüse (40) umfasst.

3. Reinigungsanordnung nach einem der vorhergehenden Ansprüche, (38)
**dadurch gekennzeichnet, dass** die Sprüheinrichtung (36) eine Sprühlanze (38) umfasst.

4. Reinigungsanordnung nach einem der vorhergehenden Ansprüche,
**dadurch gekennzeichnet, dass** der Anschluss (34) eine Dichtung umfasst.

5. Reinigungsanordnung nach einem der vorhergehenden Ansprüche,
**dadurch gekennzeichnet, dass** der Anschluss (34) die Reinigungsmediumaufnahme (44) nach oben begrenzt.

6. Reinigungsanordnung nach einem der vorhergehenden Ansprüche,
**dadurch gekennzeichnet, dass** die Sprüheinrichtung (36) zumindest abschnittsweise in der Reinigungsmediumaufnahme (44) angeordnet ist.

7. Reinigungsanordnung nach einem der vorhergehenden Ansprüche,
**dadurch gekennzeichnet, dass** diese eine zweite, insbesondere obere, Reinigungseinheit (50) aufweist, die eine Einfülleinrichtung (54) zum Einfüllen von Reinigungsmedium und/oder Spülgas in den Füllkopf (10) aufweist.

8. Reinigungsanordnung nach einem der vorhergehenden Ansprüche,
**dadurch gekennzeichnet, dass** die Einfülleinrichtung (54) und die Entlüftungseinrichtung (56) fluiddicht in einem Adapter (52) angeordnet sind, der fluiddicht auf eine Öffnung (26) des Füllkopfs (10) aufsetzbar oder in eine Öffnung (26) einsetzbar ist.

9. Elektrolytbefüllanordnung (102) mit zumindest einem insbesondere stationär angeordneten Füllkopf (10) und einer Reinigungsanordnung (30) nach einem der vorhergehenden Ansprüche.

10. Elektrolytbefüllanordnung nach Anspruch 9, **dadurch gekennzeichnet, dass** die erste und/oder zweite Reinigungseinheit (32, 50) relativ zum Füllkopf (10) bewegbar ist.

11. Verfahren zur Reinigung eines zwei Kammern (12, 14) aufweisenden Füllkopfs (10) zur Befüllung von elektrochemischen Zellen mit Elektrolyt mit den Verfahrensschritten:
a. Andocken einer ersten Reinigungseinheit (32) an eine Zellbefüllöffnung (22) des Füllkopfs (10),
b. Ansprühen der Zellbefüllöffnung (22), insbesondere einer im Bereich der Zellbefüllöffnung (22) angeordneten Dichtung,
c. Auffangen des Reinigungsmediums in einer Reinigungsmediumaufnahme (44) der ersten Reinigungseinheit (32).

12. Verfahren nach Anspruch 11, **dadurch gekennzeichnet, dass** die untere Kammer (14) des Füllkopfs (10) über die Zellbefüllöffnung (22), insbesondere vollständig, mit Reinigungsmedium befüllt wird.

13. Verfahren nach Anspruch 11 oder 12, **dadurch gekennzeichnet, dass** der unteren Kammer (14) des Füllkopfs (10) ein Spülgas, insbesondere über eine seitliche Öffnung (24) der unteren Kammer (14), zugeführt wird und über die Reinigungsmediumaufnahme (44) abgeleitet wird.

14. Verfahren, insbesondere nach einem der Ansprüche 11 bis 13, zur Reinigung eines zwei Kammern (12, 14) aufweisenden Füllkopfs (10) zur Befüllung von elektrochemischen Zellen mit Elektrolyt mit den Verfahrensschritten:
a. Befüllen einer oberen Kammer (12) des Füllkopfs (10) mit einem Reinigungsmedium,
b. Öffnen einer durch ein Absperrorgan (20) verschlossenen Öffnung (18) zwischen oberer und unterer Kammer (12, 14),
c. Ablassen des Reinigungsmediums durch die Zellbefüllöffnung (22) in die Reinigungsmediumaufnahme (44).

15. Verfahren nach einem der vorhergehenden Ansprüche 11 bis 14, **dadurch gekennzeichnet, dass** beide Kammern (12, 14) des Füllkopfs (10) mit Reinigungsmedium befüllt werden und anschließend Reinigungsmedium über die Reinigungsmediumaufnahme (44) abgelassen wird.
